# EUROPEAN PATENT APPLICATION

(11) **EP 2 560 386 A1**
(43) Date of publication of application: **20.02.2013**
(21) Application number: 11179287.5
(22) Date of filing: 30.08.2011
(51) Int. Cl.: H04N 7/26, H04N 7/64, H04N 7/24

(54) **Video processing apparatus and method**

(30) Priority: 15.08.2011 US 210287
(71) Applicant: MediaTek, Inc, Hsin-Chu 300 (TW)
(72) Inventor: Chen, Wei-Jen, 262 Jiaoxi Township, Yilan County (TW); Yu, Ya-Hui, 308 Baoshan Township, Hsinchu County (TW)
(74) Representative: 2K Patentanwälte Blasberg Kewitz & Reichel

(57) **Abstract**

A video processing apparatus is provided. The video processing apparatus includes a decoder, a controller and a display device. The decoder decodes a bitstream, wherein the bitstream comprises a plurality of frames and each frame in the plurality of frames is sub-divided into a plurality of regions. The controller is coupled to the decoder, for determining whether each region of a current frame in the plurality of frames is an intra-coded region or an inter-coded region with reference to the regions in at least one reference frame in the plurality of frames. The display device is coupled to the controller, for displaying the current frame of the plurality of frames when all regions in the current frame are the intra-coded regions or the inter-coded regions with reference to the regions in the available reference frame.

## Description

### CROSS REFERENCE TO RELATED APPLICATIONS

This application claims the priority of U.S. patent application s/n 13/210,297 filed on August 15, 2011, the whole content of which is hereby incorporated by reference..

### BACKGROUND OF THE INVENTION

### Field of the Invention

The disclosed embodiments relate to video processing, and more particularly relate to a video processing apparatus capable of displaying a video bitstream with absent reference frames and a video processing method for the same.

### Description of the Related Art

Various functionalities are implemented in a video system in order to conveniently store, process or transmit video data. For example, some video coding standards, such as MPEG 1/2/4 and H.26x, are provided to perform video data compression and decompression, so as to improve storage capacity and transmission bandwidth. These video coding standards employ block-based compression on the video data having a series of video frames by encoding later video frames based on earlier video frames. Specifically, the video data compression is achieved by reducing temporal redundancies between video frames and spatial redundancies within one single video frame. Also, some compression techniques, e.g., discrete cosine transform and motion compensation, are performed to generate a standard compliant bitstream with a relatively high compression ratio. As a result, the bitstream is allowed to be transmitted and stored in an efficient and standardized manner.

However, due to the characteristics of the video coding standards, when undesired or unrecoverable errors are introduced to the bitstream during compression or transmission, the later video frames may be erroneously decoded because of the absent or unavailable earlier video frames. Typically, the later video frames encoded with reference to the absent or unavailable earlier video frames are skipped and not displayed. This undesirable skip of frame display may cause abrupt scene changes or discontinuous scene movements, thus resulting in unfavorable viewing experiences for users.

Therefore, a video processing method for a video processing apparatus capable of processing and smoothly displaying video frames with absent or unavailable reference frames is desirable.

### BRIEF SUMMARY OF THE INVENTION

A detailed description is given in the following embodiments with reference to the accompanying drawings.

An embodiment of a video processing method according to the invention includes the following steps: decoding a bitstream, wherein the bitstream comprises a plurality of frames and each frame is sub-divided into a plurality of regions; determining whether each region of a current frame in the plurality of frames is an intra-coded region or an inter-coded region with reference to the regions in at least one previously-decoded reference frame in the plurality of frames; and displaying the current frame of the plurality of pictures when all regions in the current frame are the intra-coded regions or the inter-coded regions with reference to the regions in the available previously-decoded reference frame.

Further, another embodiment of a video processing apparatus according to the invention includes a decoder, a controller and a display device. The decoder decodes a bitstream, wherein the bitstream comprises a plurality of frames and each frame in the plurality of frames is sub-divided into a plurality of regions. The controller is coupled to the decoder, for determining whether each region of a current frame in the plurality of frames is an intra-coded region or an inter-coded region with reference to the regions in at least one previously-decoded reference frame in the plurality of frames. The display device is coupled to the controller, for displaying the current frame of the plurality of frames when all regions in the current frame are the intra-coded regions or the inter-coded regions with reference to the regions in the available previously-decoded reference frame.

### BRIEF DESCRIPTION OF THE DRAWINGS

The present invention can be more fully understood by reading the subsequent detailed description and examples with references made to the accompanying drawings, wherein:

FIG. 1 is a block diagram illustrating an embodiment of a video processing apparatus;

FIGs. 2A and 2B are diagrams illustrating the picture architecture of an exemplary MPEG-coded bitstream;

FIG. 3 is a diagram that illustrates an embodiment of processing a bitstream with absent reference frames;

FIG. 4 is a diagram that illustrates another embodiment of processing a bitstream with absent reference frames;

FIG. 5 is a flowchart illustrating an embodiment of a video processing method;

FIG. 6 is a flowchart illustrating another embodiment of a video processing method;

FIG. 7A is a diagram illustrating multiple reference frames in an ITU-T H.264 bitstream;

FIG. 7B is a diagram illustrating an embodiment of pixel masks in the current frame in an ITU-T H.264 bitstream according to the invention;

FIG. 7C is a diagram illustrating another embodiment of pixel masks in the current frame with multiple reference frames in an ITU-T H.264 bitstream according to the invention; and

FIG. 8 is a flow chart illustrating yet another embodiment of a video processing method according to the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

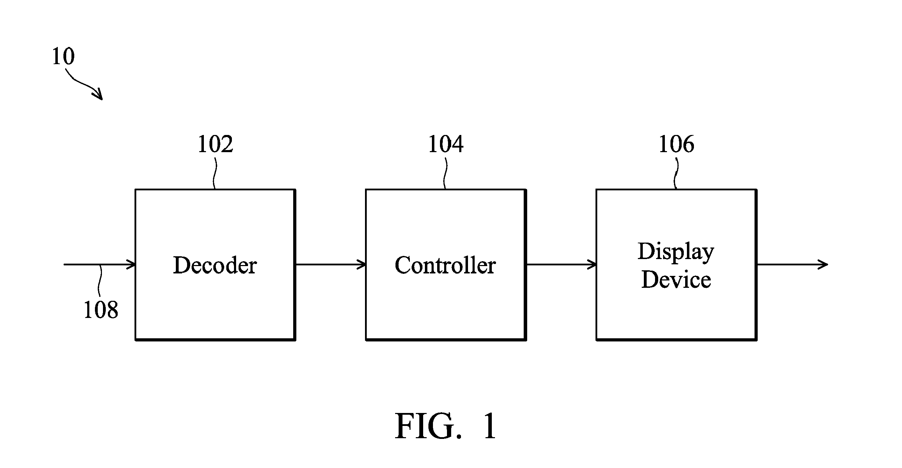

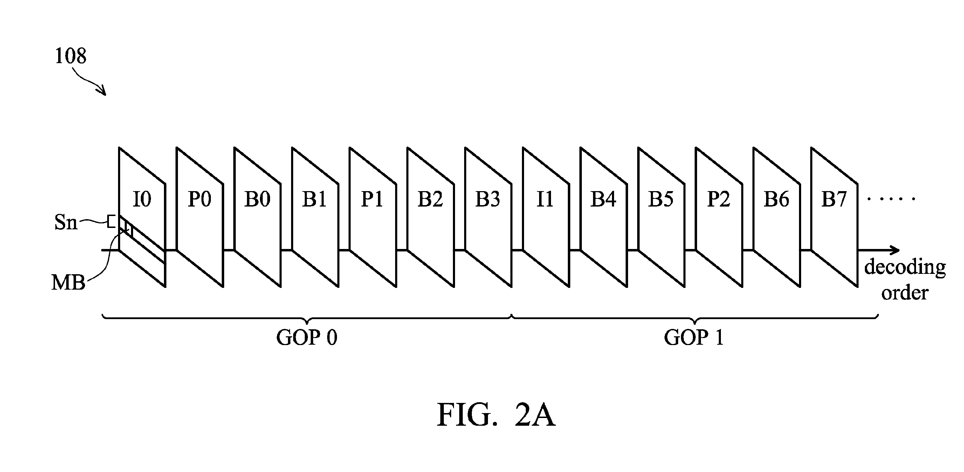

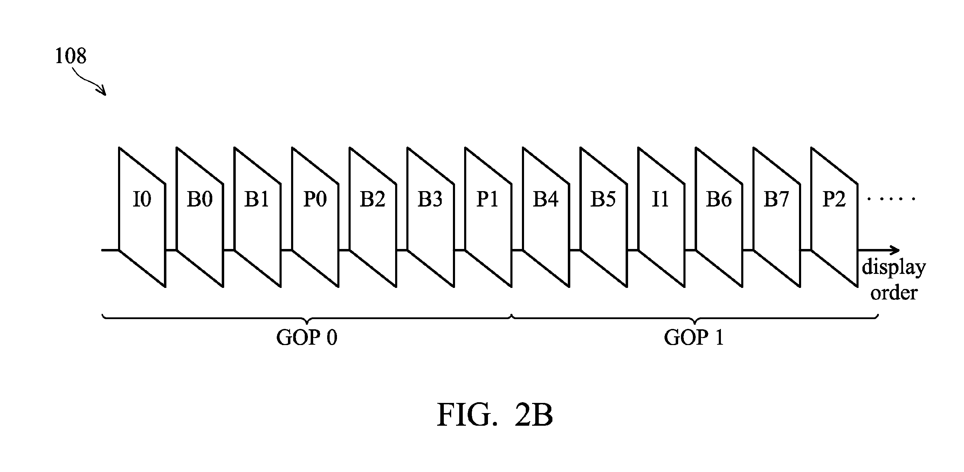

FIG. 1 is a block diagram illustrating an embodiment of a video processing apparatus 10. As shown in FIG. 1, the video processing apparatus 10 comprises a decoder 102, a controller 104 and a display device 106. The decoder 102 receives and decodes a bitstream 108. According to an embodiment, the bitstream 108 is an MPEG-coded bitstream having a plurality of groups of pictures (GOPs), as shown in FIGs. 2A and 2B.

FIG. 2A is a diagrams illustrating groups of pictures in a decoding order and FIG. 2B is a diagrams illustrating groups of pictures in a display order.

Referring to FIGs. 2A and 2B, there are two groups of pictures GOPO and GOP1. Each GOP comprises a frame sequence, such as GOPO, which begins with an intra-coded frame (1-frame) 10 followed by an arrangement of predictive-coded frames (P-frame) P0, P1 and bi-directional predictive-coded frames (B-frame) B0, B1, B2 and B3. The intra-coded frame 1-frame is coded without reference to other frames. The predictive-coded frame P-frame is coded with temporal reference to the previous 1-frame or P-frame. Generally, 1-frames and P-frames are known as reference frames and used to define future frames in the decoding order. The bi-directional predictive-coded frame B-frame is coded with reference to the previous and following 1-frames or P-frames within one GOP. Note that for a current GOP1 in the decoding order as shown in FIG. 2A, it is also possible for a first B-frame B4, which is following the first 1-frame I1 of the current GOP, to refer to some frames within a previous GOPO. In this case, a flag Close_GOP is used in the header of the GOP1 to indicate that the B-frame is encoded with forward reference to some frames of the previous GOPO. Further, each frame, e.g., an 1-frame I0, is divided into multiple slices, such as a slice Sn. Each slice comprises a plurality of macroblocks. A macroblock MB represents a group of pixels, e.g., 8x8, 8x16, 16x8 and 16x16 block. The 8x8 block may be sub-partitioned into block sizes of 4x4, 4x8 or 8x4.

As show in FIGs. 2A and 2B, the decoding order of the bitstream 108 and the display order thereof are different. In FIG. 2A, the decoding order of the GOPO and GOP1 decoded by the decoder 102 in FIG. 1 is "I0, P0, B0, B1, P1, B2, B3, I1, B4, B5, P2, B6, B7", while in FIG. 2B, the display order of the GOPO and GOP1 on the display device 106 in FIG. 1 is "I0, B0, B1, P0, B2, B3, P1, B4, B5, I1, B6, B7, P2". As described above, the decoding of the P-frames or B-frames may require decoded data derived from decoding one or earlier reference frames. When the earlier reference frames being referenced by the P-frames or B-frames are absent or invalid, the later P-frames or B-frames are unable to be decoded.

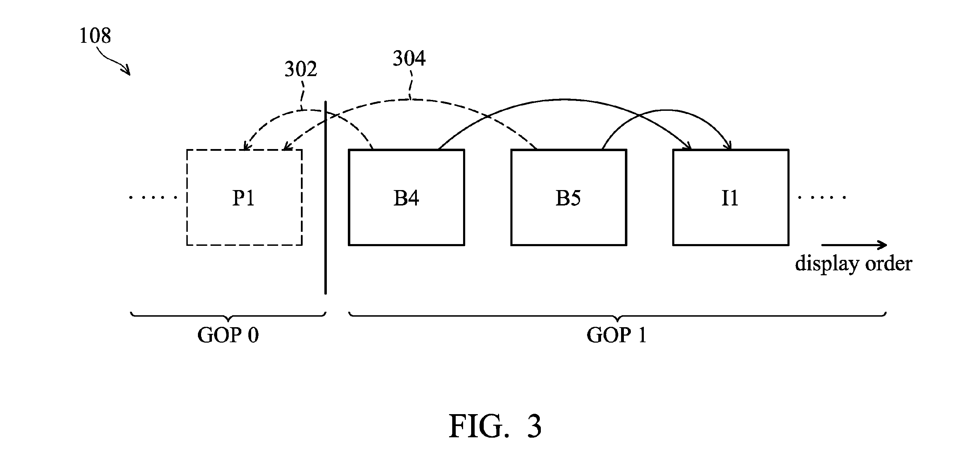

FIG. 3 is a diagram that illustrates an embodiment of processing a bitstream 108 with absent reference frames. Referring to FIGs. 1 and 3, it is assumed that a P-frame P1 is absent due to the absent GOPO. In an embodiment, upon a channel change to a new channel, the GOPO associated with the new channel may not be able to be received by the decoder 102, thereby making the P-frame P1 absent. In another embodiment, if the GOPO is stored in a defective area of a storage medium, e.g., a disk, the GOPO may no longer be available for the decoder 102 and the P-frame P1 becomes absent.

During operation, the controller 104 coupled to the decoder 102 then determines whether the two B-frames B4 and B5 of a following GOP1 have macroblocks with forward reference to the previous GOPO, as shown by arrows 302 and 304 of FIG. 3. In some embodiments, the two B-frames B4 and B5 may be important for some logo or key frames.

From the aforementioned description, since the two B-frames B4 and B5 to be displayed is following the 1-frame I1 in the decoding order as shown in FIG. 2A, the flag Close_GOP may be directly used to determine whether the B-frames B4 and B5 have been only encoded with backward reference frames or were intra-coded. However, because the flag Close_GOP may be set during any editing period occuring after the encoding process, thus making the flag Close_GOP unreliable to use.

Thus, instead of using the flag Close_GOP, the controller 104 determines whether the P-frame P1 of the GOPO is referenced by the two B-frames B4 and B5 according to information specified from the encoding of the two B-frames B4 and B5 to indicate the reference to be used. For example, the specified information may be the motion vector information for indicating the reference frame to be used.

When the controller 104 determines that the two B-frames B4 and B5 of the subsequent GOP1 have no macroblock with forward reference to the previous GOPO, such as the P-frame P1, the display device 106 coupled to the controller 104 then displays the two B-frames B4 and B5 as they can be correctly decoded.

Otherwise, the two B-frames B4 and B5 that refer to the absent forward reference frame P1 are skipped and not displayed by the controller 104, so that the display device 106 may avoid displaying the erroneously decoded B-frames B4 and B5.

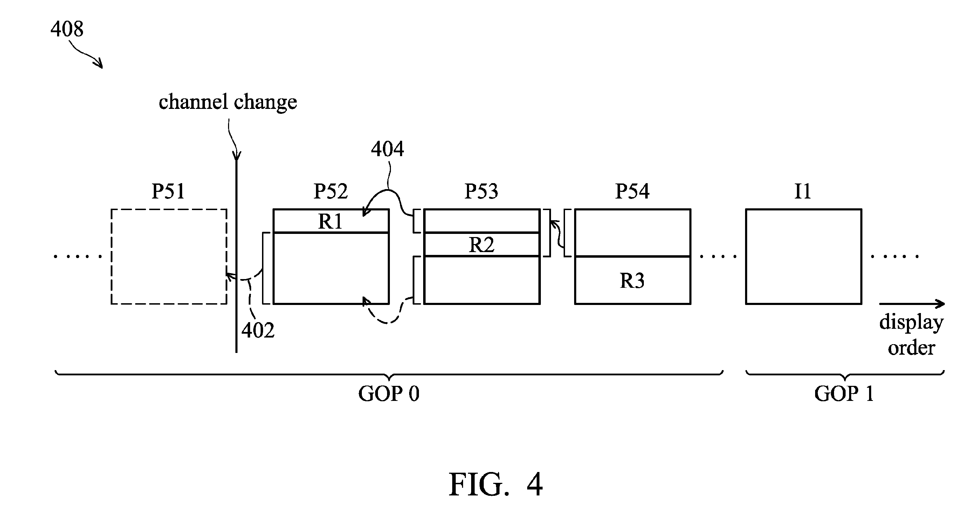

FIG. 4 is a diagram that illustrates another embodiment of processing a bitstream 408 with absent reference frames.

Typically, when a user initiates changing a channel, the decoder 102 as shown in FIG. 1 cannot begin decoding the bitstream 408 until a next 1-frame or a next GOP boundary is recognized. However, referring to FIG. 4, when the size of a current GOPO with the absent 1-frame I0 (not shown) is large, the waiting time period for the next 1-frame (i.e., I1) or the next GOP boundary (i.e., GOP1) is accordingly longer, thereby significantly increasing the time for changing channels or latency. Further, when changing a channel, the channel to be viewed displays a black color or renders distorted frames, which were erroneously decoded by the decoder 102, until the next 1-frame I1 is available, thereby, deteriorating users' video viewing experience.

Thus, according to an embodiment, before receiving the next 1-frame I1, the controller 104 may employ some useful information of the current GOPO for eliminating the above-mentioned drawbacks.

More specifically, as shown in FIG. 4, upon changing of a channel, the decoder 102 begins to receive the new bitstream 408 associated with the channel to be viewed. Note that it is assumed that the new bitstream 408 associated with the channel to be viewed, has just missed the frames prior to a P-frame 52 of the GOPO.

During operation, the controller 104 determines whether a current frame to be displayed, such as a P-frame P52 of the GOPO, has macroblocks with forward reference to an absent frame, such as a P-frame P51 of the GOPO.

When the controller 104 determines the P-frame P52 has no macroblock with forward reference to the absent P-frame P51, i.e., all macroblocks of the P-frame P52 are intra-coded, the display device 106 then displays the P-frame P52, so as to ensure that users will view a correctly decoded P-frame P52 without latency in changing channels.

Furthermore, when the absent P-frame P51 is determined to be referenced by a portion of macroblocks of the P-frame P52, as shown by an arrow 402, it is then determined that the remaining macroblocks R1 are intra-coded. The inter-coded macroblocks of the P-frame P52 may be erroneously decoded as they are forward referenced to the absent P-frame P51. However, the intra-coded macroblocks R1 of the P-frame P52 can be correctly decoded. The controller 104 determines intra-coded macroblocks R2 of a P-frame P53 following the P-frame P52. In addition, the decoding of the P-frame 53 may require some macroblock information derived from decoding the intra-coded macroblocks R1, as shown by an arrow 404. Similarly, the controller 104 determines intra-coded macroblocks R3 and inter-coded macroblocks from a P-frame P54, which is following the P-frame P53. In detail, the macroblock information derived from decoding the intra-coded macroblocks R1 and R2 are acquired and integrated therebetween to decode the inter-coded macroblocks of the P-frame P54. As a result, the macroblock information derived from the intra-coded macroblocks R3 and the inter-coded macroblocks of the P-frame P54 are both available for the decoder 102, thereby establishing spatially corresponded macroblocks of a desired frame, i.e., P-frame P54.

In this embodiment of FIG. 4, the controller 104 establishes the desired P-frame P54 by acquiring macroblock information of the desired P-frame P54 according to the intra-coded macroblocks R1, R2 and R3, respectively from the P-frames P52, P53 and P54. Further, the macroblock information derived from the intra-coded macroblocks R1, R2 and R3 are acquired and integrated to decode other inter-coded macroblocks of the P-frames P53 and P54. The process of establishing spatially corresponding macroblocks of the desired frame is repeated until the macroblock information for all macroblocks of the desired P-frame P54 is acquired. Note that the P-frames P52, P53 and P54 are successive frames and of the same GOP. As a result, the display device 106 displays the desired P-frame P54, rather than the next 1-frame I1, thus reducing the latency in changing channels. Note that in an embodiment of the invention, the display device 106 may display a part of the desired P-frame P54, wherein only the part of the macroblocks of the desired P-frame P54 is obtained according to operations described above and design necessity. Thus, repeating the operation until all macroblocks of the desired frames is acquired may not be required.

Note further that the aforementioned embodiments may be applied for any decoding schemes that are based on macroblocks.

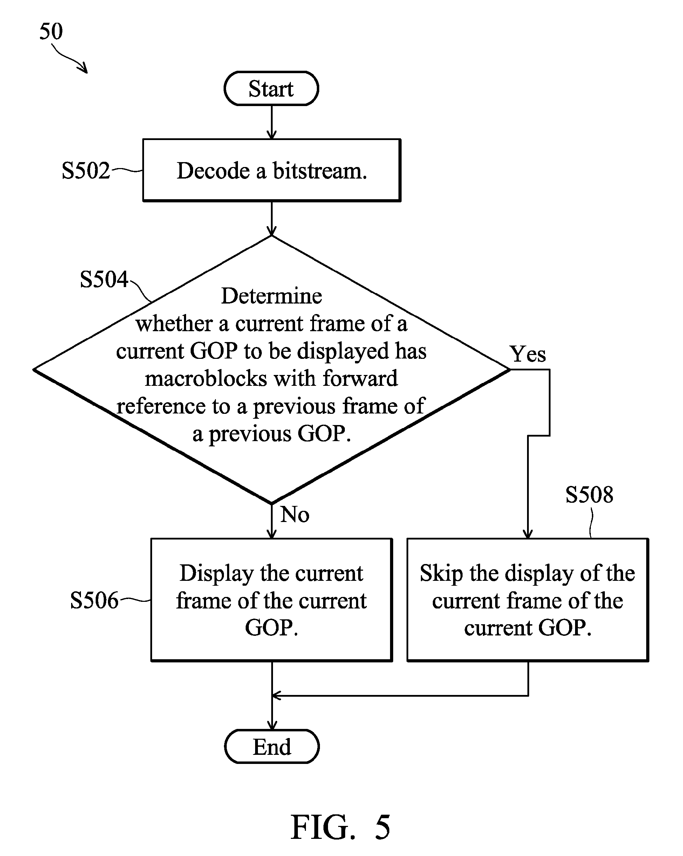

FIG. 5 is a flowchart illustrating an embodiment of a video processing method 50 performed by the video processing apparatus 10 as shown in FIG. 1.

Upon starting the video processing method 50, the decoder 102 receives and decodes a bitstream 108 (step S502). The bitstream 108 comprises a plurality of GOPs and each GOP comprises a frame sequence, as shown in FIGs. 2A and 2B. Next, it is determined whether a current frame of a current GOP to be displayed has macroblocks with forward reference to a previous frame of a previous GOP (step S504). For example, the controller 104 determines whether the B-frame B4 of the GOP1 has macroblocks with forward reference to the absent P-frame P1 of the GOPO, as shown by the arrow 302 of FIG. 3. Note that detailed description of determination is provided in the embodiments in FIG. 3, and is not repeated here.

When the current frame has no macroblock with forward reference to the absent frame of the previous GOP, the display device 106 then displays the current frame of the current GOP (step S506). For example, as shown in FIG. 3, the B-frame B4 of the GOP1 is encoded only with backward reference to the 1-frames I1, and the display device 106 displays the B-frame B4 as it can be correctly decoded. Furthermore, when the current frame of the current GOP, e.g., the B-frame B4 of the GOP1, has macroblocks with forward reference to the absent frame of the previous GOP (as shown by the arrow 302), e.g., the absent P-frame P1 of the GOPO, the current frame is skipped or dropped without being displayed on the display device 106 (step S508).

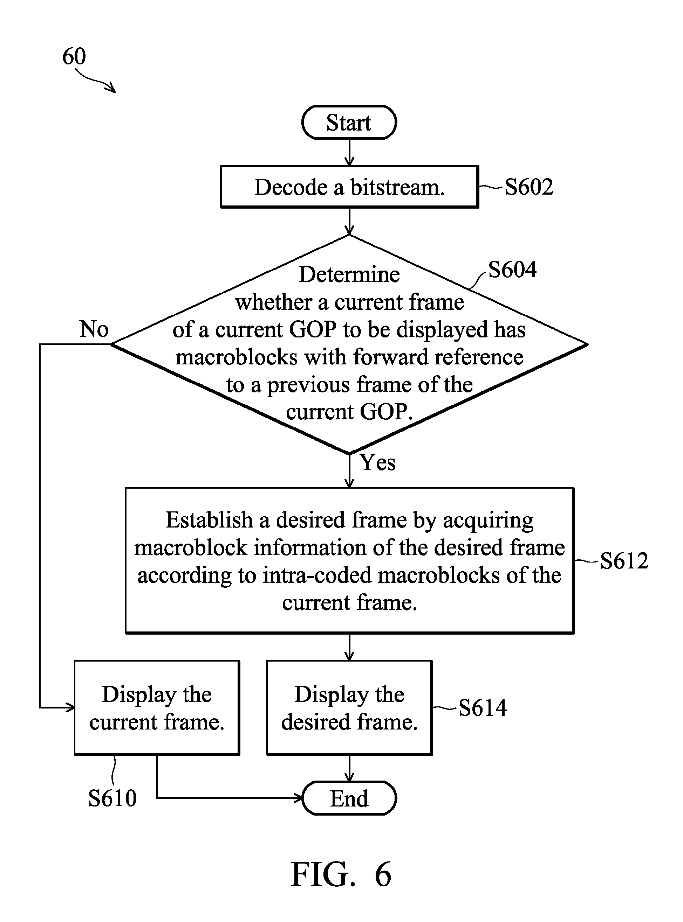

FIG. 6 is a flowchart illustrating another embodiment of a video processing method 60 performed by the video processing apparatus 10 as shown in FIG. 1.

Upon starting the video processing method 60, the decoder 102 receives and decodes the bitstream 108 (step S602). In this illustrated embodiment, the bitstream 108 comprises a plurality of GOPs and each GOP comprises a frame sequence, as shown in FIGs. 2A and 2B.

Subsequently, it is determined whether a current frame of a current GOP to be displayed has macroblocks with forward reference to a previous frame of the current GOP (step S604). As shown in FIG. 4, the controller 104 determines whether the absent P-frame P51 of the GOPO is referenced by the following P-frame P52 of the GOPO, as shown by arrow 402.

If the current frame of the current GOP has no macroblock with forward reference to the previous frame of the current GOP, the current frame may be composed of intra-coded macroblocks. For example, when the current frame is a P-frame and has no macroblock with forward reference to the previous frame of the current GOP, the P-frame is then intra-coded. As such, since all intra-coded macroblocks of the current frame are available, the display device 106 then displays the current frame (step 5610).

Otherwise, if the current frame of the current GOP has macroblocks with forward reference to the previous frame of the current GOP, the current frame is determined to be composed of all or a portion of inter-coded macroblocks. Referring to FIG. 4, the current P-frame P52 has intra-coded macroblocks R1. In addition, the remaining macroblocks of the current P-frame P52 are inter-coded with forward reference to the absent P-frame P51. In this regard, the controller 104 establishes a desired frame by acquiring macroblock information of the desired frame according to intra-coded macroblocks of the current frame. More specifically, the controller 104 establishes the desired frame by acquiring and integrating the macroblock information respectively from a set of successive frames, e.g., P-frames P52, P53 and P54, to obtain entire macroblock information of the desired frame, i.e., the macroblock information for all macroblocks of the desired frame is acquired (step S612). Note that the process of establishing the desired frame was illustrated previously for the embodiments associated with FIGs. 1 and 4, and hence, further description thereof is omitted for brevity. Finally, the desired frame is displayed on the display device 106 (step S614).

In another embodiment, the video processing apparatus 10 is capable of decoding bitstreams in different codec formats (e.g. MPEG1/2/4, ITU-T H.264, etc, but not limited thereto.). The granularity of the ITU-T H.264 format can be established in the slice level rather than the frame level in the MPEG2 format. In an embodiment, when the bitstream 108 is in an ITU-T H.264 format, each of the plurality of frames in the bitstream 108 can be sub-divided into a plurality of blocks, macroblocks or slices, as, such as I-slices (i.e. intra-coded slices), P-slices (i.e. predictive coded slices) and B-slices (i.e. bi-directional predictive coded slices) etc, wherein each P-slice and B-slice have their own reference lists (e.g. reference list 0 for P-slices, reference list 0 and 1 for B-slices) for inter prediction. The ITU-T H.264 standard further supports an instantaneous decoding refresh (IDR) frame, wherein the IDR frame is a type of I-frame. When an IDR frame appears in the bitstream 108, it indicates that this is a beginning of a new coded bitstream and all reference frames are labeled as "unused for reference" immediately after the IDR frame is decoded. In other words, the IDR frame in an ITU-T H.264 bitstream is similar to the Close_GOP flag in a MPEG2 bitstream. However, when a user changes a live DTV channel, there may be no IDR picture or I-frame received within a short period of time, and there may be no IDR picture in some ITU-T H.264 bitstreams. Typically, there are two conventional methods to solve this issue. First, a timeout period is set to force the controller 104 to output the video. Second, the video is not outputted until finding the frame with the correct reference list (i.e. all the reference frames in the reference list are available or correctly decoded). As a result, the time period between changing the DTV channel and outputting the video can not be reduced significantly by these two conventional methods.

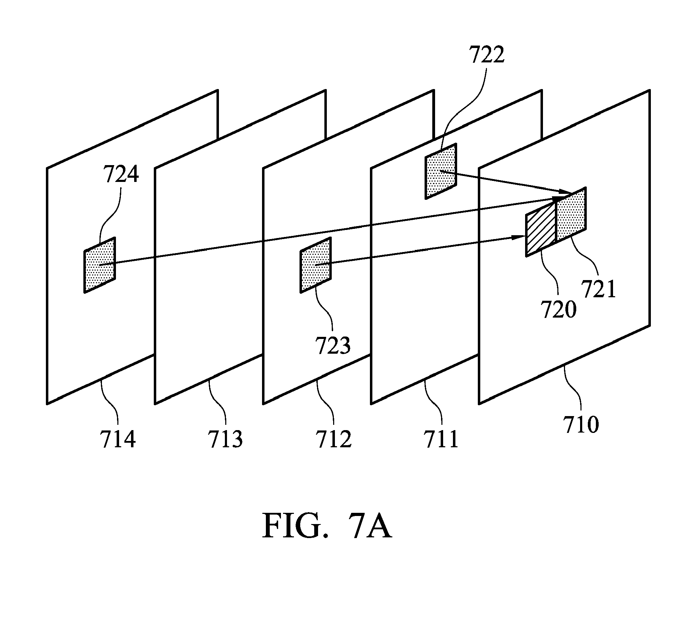

FIG. 7A is a diagram illustrating multiple reference frames in an ITU-T H.264 bitstream. For example, a frame 710 is the current frame, and frames 711, 712, 713, and 714 are previously-decoded frames as reference for the current frame 710. More specifically, a predictive coded slice (P-slice) or a bi-directional predictive coded slice (B-slice) may have more than one reference frame. The P-slice 720 forward refers to the P-slice 723 in a previously-decoded frame 712, and The B-slice 721 forward refers to the P-slice 722 and 724 in previously-decoded frames 711 and 714, respectively.

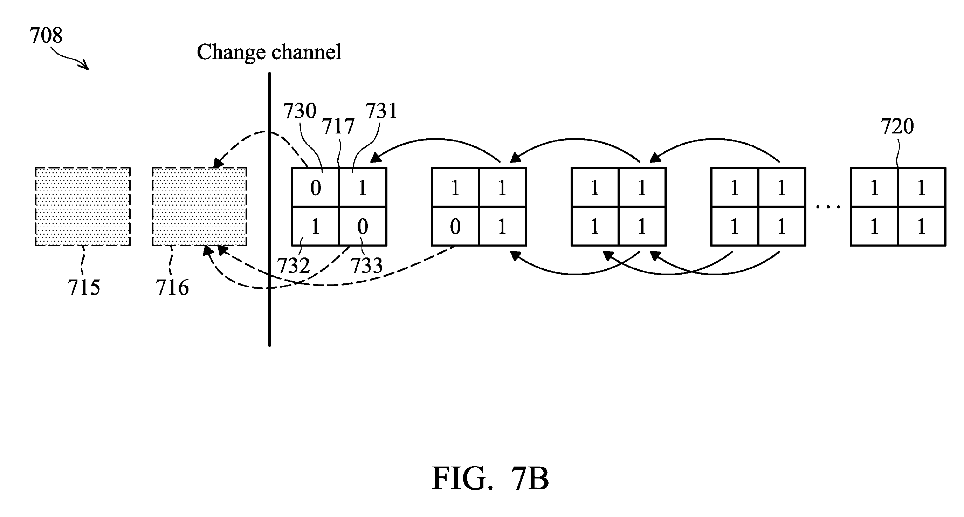

FIG. 7B is a diagram illustrating an embodiment of pixel masks in the current frame in an ITU-T H.264 bitstream according to the invention. As shown in FIG. 7B, each P-frame can be sub-divided into a plurality of regions, wherein each region may have a variable block size, such as a block (e.g. 16x8, 8x16, 8x4, or 4x8), a macroblock(16x16, 8x8, or 4x4), a slice, or a frame. Further, the size of a slice can be one of the blocks as shown in FIG. 9. Each region in the current frame is labeled with a pixel mask value (e.g. a one-bit flag) to represent the reference status of the region. For example, the regions 730 and 733 are P-slices and refer to the absent frame 716 (e.g. absent indicates unavailable or incorrectly-decoded), and regions 713 and 732 are intra-coded slices (i.e. I-slice). However, when the user initiates changing the DTV channel between the frames 716 and 717, the current frame after the channel change (e.g. frame 717 hereafter) can not refer to prior decoded frames before the channel change.

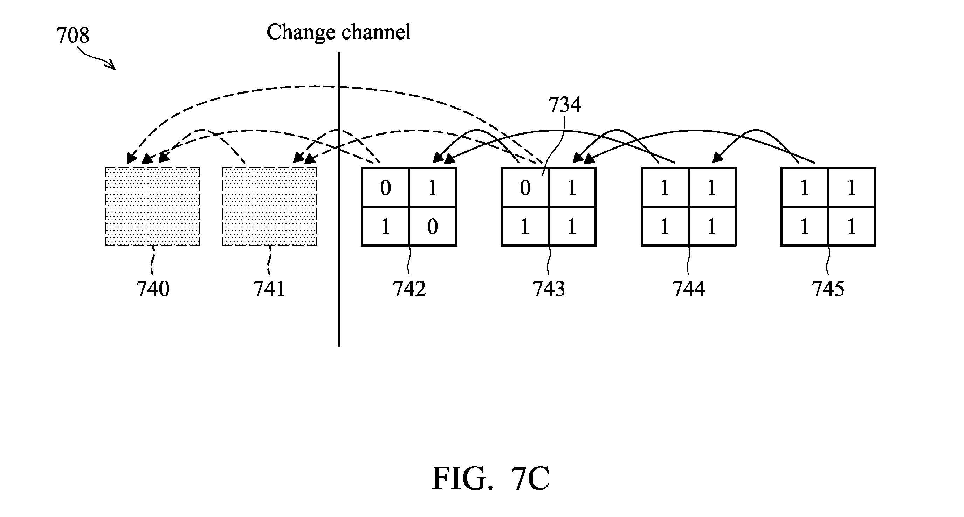

FIG. 7C is a diagram illustrating another embodiment of pixel mask values in the current frame with multiple reference frames in an ITU-T H.264 bitstream. Since ITU-T H.264 supports "multiple reference frame motion compensation", the P-slices or B-slices refer to multiple prior decoded frames as reference frames. For example, as shown in FIG. 7C, region 734 in frame 743 is a B-slice with reference to previously-decoded frames 740, 741 and 742. However, it is assumed that the frames 740 and 741 are absent due to the change of the channel. In an embodiment, upon a channel change to a new channel, the frames associated with the previous channel may not be able to be received by the decoder 102, thereby making the frames 740 and 741 absent. In another embodiment, if the current frame is frame 742 and the previously-decoded frames 740 and 741 are stored in a defective area of a storage medium (e.g. a disk), the prior decoded frames 740 and 741 may no longer be available for the decoder 102, and thus the frames 740 and 741 would become absent. More specifically, the waiting time period for the next IDR frame (i.e. frame 720) may be very long, thereby significantly increasing the time for changing channels or latency. Further, when changing a channel, the channel to be viewed displays a black color or renders distorted frames, which were erroneously decoded by the decoder 102, until the next IDR-frame (i.e. frame 720) or I-frame is available.

In an embodiment, when changing a channel, each pixel mask value of the current frame (e.g. frame 742) is initialized to zero. When a region is an intra-coded block or slice, or an inter-coded region with reference to another region with a pixel mask value "1" (i.e. available, intra-coded or correctly decoded) in the previous frame, the pixel mask value of the region is labeled with "1". Otherwise, the pixel mask value is kept at "0". The pixel mask value "1" indicates that the region is at a "ready" status because the region is an intra-coded macroblock/slice or an inter-coded region with reference to the corresponding macroblocks/slices with the "ready" status (i.e. available, intra-coded or correctly decoded). Contrarily, the pixel mask value "0" indicates that the region is at an "unready" status because the region is an inter-coded macroblock/slice with reference to other macroblocks/slices with the "unready" status (i.e. unavailable, or referring to unavailable macroblocks/slices/frames). In an embodiment, referring to FIG. 7B, the region 732 in the frame 717 is an intra-coded slice and does not refer to other slices different from the region 732, and thus the pixel mask value of the region 732 is updated with "1" by the decoder 102. Further, the region 730 refers to the frame 716, which is a prior decoded frame before changing to a new channel, and thus the frame 716 is an unusable reference frame or not available for the region 730. Therefore, the pixel mask value of the region 730 is kept at "0" .

After processing each sub-divided region in the current frame, the pixel mask value (e.g. the reference status) of each sub-divided region can be obtained, and thus the controller 104 determines whether to display the current frame. In an embodiment, when all the pixel mask values in the current frame are marked as "ready" (e.g. the value "1"), the decoder 102 transmits the current frame to the controller 104, and the controller 104 starts to display the current frame on the display device 106. Contrarily, when any pixel mask value is marked as "unready" (e.g. the value "0") in the current frame, the current frame is skipped and not displayed by the controller 104, so that the display device 106 may not display the erroneously decoded current frame. In short, the decoder 102 always decodes the current frame, and the controller 104 determines whether to display the current frame according to the pixel mask values of the current frame.

In yet another embodiment, each sub-divided region has its own reference list (e.g. reference list 0 for P-slices, reference list 0 and 1 for B-slices). The decoder 102 further determines whether all the reference frames in the reference lists of each slices of the current frame are available, and the controller 104 starts to display the current frame on the display device 106 when all the reference frames in the reference lists of the current frame are available. For example, all the reference frames in the reference lists of frames 744 and 745 are available, and the controller 104 starts to display frames 744 and 745.

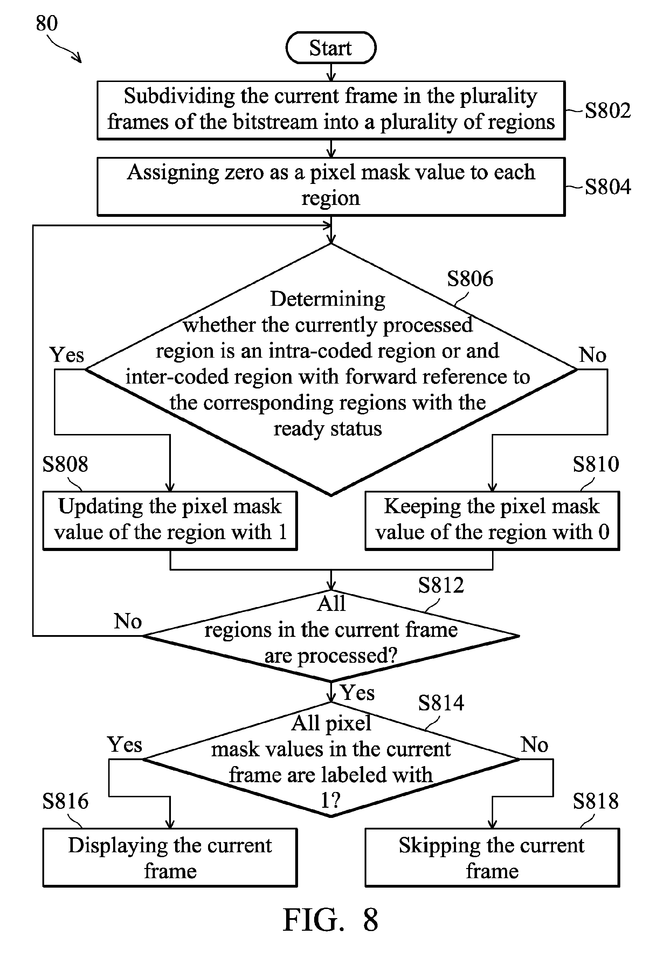

FIG. 8 is a flow char illustrating another exemplary embodiment of a video processing method according to the invention 80 performed by the video processing apparatus 10 as show in FIG. 1.

Upon starting the video processing method 80, the decoder receives and decodes the bitstream 108. The bitstream 108 comprises a plurality of frames and the current frame in the plurality of frames is sub-divided into a plurality of regions (step S802), as shown in FIG. 7B and FIG. 7C. Next, each region is assigned zero as a pixel mask value to present the reference status, which indicates all regions are initially at an "unready" status (step S804). Further, the decoder 102 determines whether the currently processed region is an intra-coded region or an inter-coded region with reference to the corresponding regions with the "ready" status (e.g. pixel mask value = 1) (step S806). If the region is an intra-coded region or refers to the regions with the "ready" status, the decoder 102 updates the pixel mask value of the region with "1" (step S808). Otherwise, the decoder 102 keeps the pixel mask value of the region with "0" (step S810). After performing steps S808 or S810, the decoder 102 determines whether all regions in the current frame are processed (step S812). If not all regions are processed, the decoder 102 goes back to step S806. If all regions are processed, the decoder 102 further checks whether all pixel mask values in the current frame is labeled with "1" (step S814). If so, the decoded current frame is displayed by the controller 104 on the display device 106 (step S816). If not, the decoded current frame is skipped and not displayed by the controller 104 on the display device 106 (step S818). It should be noted that when no IDR frame or I-frame is found after changing the DTV channel, the time period between the DTV channel change and displaying the correctly coded frame can be significantly reduced by the proposed video processing method 70 of the invention.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A video processing method, comprising:
decoding a bitstream, wherein the bitstream comprises a plurality of frames and each frame in the plurality of frames is sub-divided into a plurality of regions;
determining whether each region of a current frame in the plurality of frames is an intra-coded region or an inter-coded region with reference to the regions in at least one previously-decoded reference frame in the plurality of pictures; and
displaying the current frame of the plurality of pictures when all regions in the current frame are the intra-coded regions or the inter-coded regions with reference to the regions in the available previously-decoded reference frame.

2. The video processing method as claimed in claim 1, wherein before the determining step, the method further comprises:
assigning zero as a pixel mask value to each region of the current frame.

3. The video processing method as claimed in claim 2, wherein the determining step further comprises:
updating the pixel mask value of each region of the current frame to 1 when the region is the intra-coded region or the inter-coded region with reference to the regions in the available one reference frame in the plurality of pictures.

4. The video processing method as claimed in any of the preceding claims, further comprising:
skipping the display of the current frame in the plurality of pictures when the current frame has the regions with reference to at least one previously-decoded frame in the plurality of pictures and the previously-decoded frame is absent.

5. The video processing method as claimed in claim 4, wherein each region is an intra-coded slice, an inter-coded slice, or a block in the intra-coded slice or the inter-coded slice.

6. The video processing method as claimed in any of the preceding claims, wherein each region comprises at least one reference list with at least one reference frame when the regions are inter-coded regions, and the method further comprises:
displaying the current frame of the plurality of frames when the reference frames in the reference lists of all inter-coded regions in the current frame are available.

7. The video processing method as claimed in any of the preceding claims, wherein the bitstream is an ITU-T H.264-coded bitstream.

8. A video processing apparatus, comprising:
a decoder for decoding a bitstream, wherein the bitstream comprises a plurality of frames and each frame in the plurality of frames is sub-divided into a plurality of regions;
a controller, coupled to the decoder, for determining whether each region of a current frame in the plurality of frames is an intra-coded region or an inter-coded region with reference to the regions in at least one previously-decoded reference frame in the plurality of frames; and
a display device, coupled to the controller, for displaying the current frame of the plurality of frame when all regions in the current frame are the intra-coded regions or the inter-coded regions with reference to the regions in the available previously-decoded reference frame.

9. The video processing apparatus as claimed in claim 8, wherein the controller further assigns zero as a pixel mask value to each region of the current frame before determining whether each region of the current frame is an intra-coded region or an inter-coded region with reference to the regions in the previously-decoded reference frame in the plurality of frames.

10. The video processing apparatus as claimed in claim 9, wherein the controller further updates the pixel mask value of each region of the current frame to 1 when the region is the intra-coded region or the inter-coded region with reference to the regions in the available previously-decoded reference frame in the plurality of frames.

11. The video processing apparatus as claimed in claim 10, wherein the controller further skips the display of the current frame in the plurality of frames when the current frame has the regions with reference to at least one previously-decoded frame in the plurality of frames and the previously-decoded frame is absent.

12. The video processing apparatus as claimed in claim 11, wherein each region is an intra-coded slice, an inter-coded slice, or a block in the intra-coded slice or the inter-coded slice.

13. The video processing apparatus as claimed in any of claims 8 to 12, wherein each region comprises at least one reference list with at least one reference frame, and the controller further displays the current frame of the plurality of frames on the display device when the reference frames in the reference lists of all regions in the current frame is available.

14. The video processing apparatus as claimed in any of claims 8 to 13, wherein the bitstream is an ITU-T H.264-coded bitstream.
